# EUROPEAN PATENT SPECIFICATION

(11) **EP 0 964 065 B1**
(45) Date of publication and mention of the grant of the patent: **22.08.2001**
(21) Application number: 99110751.7
(22) Date of filing: 04.06.1999
(51) Int. Cl.: C21C 5/46, C21C 5/52, F27B 3/22, F27D 23/00

(54) **Double lance burner/injection device with orientable lance units and melting method using same**
Zweilanzen-Brenner/Injektor-Vorrichtung mit orientiebaren Lanzen und Einschmelzverfahren unter Verwendung dieser Vorrichtung
Dispositif d'injection et de brûleur à deux lances orientables et procédé de fusion utilisant ce dispositif

(30) Priority: 08.06.1998 IT UD980095
(43) Date of publication of application: 15.12.1999
(73) Proprietor: More Srl, 33013 Gemona del Friuli (UD) (IT); DANIELI & C. OFFICINE MECCANICHE S.p.A., 33042 Buttrio (UD) (IT)
(72) Inventor: Londero, Lucio, 33013 Gemona Del Friuli (UD) (IT); Gensini, Gianni, 33030 Buia (UD) (IT); Orsillo, Paolo, 33058 S. Giorgio Di Nogaro (UD) (IT); Seravalli, Luciano, 33013 Gemona Del Friuli (UD) (IT); Contardo, Claudio, 33030 Ragogna (UD) (IT)
(74) Representative: Petraz, Gilberto Luigi

(56) References cited:
- EP-A- 0 671 475
- EP-A- 0 693 561
- EP-A- 0 725 150
- DE-C- 19 625 537
- FR-A- 2 634 787
- US-A- 4 986 847

## Description

### FIELD OF THE INVENTION

This invention concerns a perfected melting method and a device suitable to achieve the method as set forth in the respective main claims.

The invention is applied in the field of melting metals which provides for the injection into the melting container, during the melting cycle, of technological gases and solid combustible materials either in powder or in particle form.

By injecting these additional materials, which is a technique already known in the state of the art, it is possible to constitute alternative energy sources apart from the main energy source, which is usually electricity, and to achieve specific chemical and technological reactions which improve the productivity of the melting cycle and the quality of the product obtained.

### BACKGROUND OF THE INVENTION

At present in melting processes, for example but not only in electric arc furnaces, the state of the art includes the technique of blowing into the container where the melting is performed comburent and combustible technological gases such as oxygen, methane, natural gases and others, and of injecting solid particles or powders of combustible materials containing carbon.

This technique has many functions and many effects on the melting process.

A first function is to produce energy to supplement the primary energy, for example the electric energy in the case of electric arc furnaces.

A second function is to generate chemical reactions to form slag, and to obtain the foaming of the slag itself, thus increasing the screening effect of the electric arc and therefore its efficiency.

A further function is to perform and activate the necessary metallurgical operations.

In order to inject and blow in the gases and solid materials, the appropriate specific machines are used; these include consumable lances or non-consumable supersonic lances for blowing in oxygen, burners for oxygen and gassy and/or solid combustible materials, and consumable lances or non-consumable supersonic lances to inject carbon particles.

The state of the art includes machines which achieve together the function of a supersonic lance and a burner.

The state of the art also includes techniques to inject carbon both by means of the appropriate injector devices, or lances, arranged at points distributed on the walls of the melting container or through apertures, for example the slagging door, or with lances which have a double function as a burner and an injector of carbon powder.

Although this practice is very widespread in those operations which are commonly performed in the metallurgical field, and although it is well-known to the state of the art, it does nonetheless involve considerable problems with regard to the process, the mechanics and the plant.

In the first place, there is a large number of machines installed on the walls of the melting container and consequently this involves considerable problems in installation, adjustment, tuning, control and management both with regard to the process and to maintenance.

Secondly, some of these machines must be inserted inside the melting volume, which entails considerable wear and even sudden breakages or defects during functioning.

An example of the equipment known in the state of the art is given in EP-A-693 561, which illustrates an electric arc furnace equipped with two oxygen lances which penetrate into the melting volume for a considerable distance.

The lances are subject to being hit by splashes of liquid metal at extremely high temperatures, they may be knocked by the scrap during the melting process and they are also subjected to very high thermal stress.

Moreover, this document does not provide mechanisms to orientate and direct the streams of gas delivered by the lances, nor does it provide to inject carbon fuel to optimise the energy contribution.

In fact, the method described provides to produce carbon monoxide by removing carbon from the bath of liquid steel and subsequently to burn the carbon monoxide in the upper part of the furnace.

The state of the art includes the configuration wherein technological oxygen is blown into the bath of liquid metal and carbon powder is injected from above or together with the oxygen; an example of this configuration is shown in DE-C-1 962 537.

However, the carbon powder reacts only to a small degree with the oxygen, whether it be in gassy form or in the form of ferrous oxide, and does not exploit the whole energy and chemical potential.

This is because on the one hand the carbon powder is dispersed in the bath of liquid metal before the reaction with the oxygen starts, and on the other hand there is no provision to relate the quantity of oxygen stoichiometrically to the fixed carbon contained in the quantity of carbon powder introduced: therefore, the result obtained in terms of energy produced is greatly reduced.

In this case too, the oxygen lances are taken for a considerable distance inside the volume of the furnace, in this specific case in a corridor created by burners associated with the lances, and even so far as to penetrate the layer of slag, in order to take the oxygen in depth inside the bath of molten metal and consequently to proceed with the decarburation of the bath of steel.

The lances may be moved axially according to the current step of the melting cycle.

DE'537 provides to inject oxygen directly into the slag, but only during the slagging step which follows the end of the melting cycle of the load of metal.

US-A-4 986 847 provides to inject oxygen by means of a first lance and solid material in powder form by means of a second lance located in proximity with the first.

The stream of material emerging from the second lance meets the stream of gas emerging from the first lance well above the layer of slag, and is deviated thereby and transported inside the metal bath.

Both the lances penetrate for a considerable distance into the inner volume of the furnace, with the risks and disadvantages mentioned above.

Moreover, no provision is made for any stoichiometric balancing between the oxygen introduced with the first lance and the solid material introduced with the second.

Another disadvantage of solutions known to the state of the art is that the speed of the chemical reactions which occur is conditioned by the speed at which the substances introduced are distributed inside, because of the gradients of concentration in the upper region of the bath of liquid metal and in the layer of slag thereabove, which constitute the main vector of oxidation-reduction; it is only to a limited extent that the speed of the chemical reactions is conditioned by the fluido-dynamic transfer due to the transport of solid particles.

The present applicants have designed, tested and embodied this invention to find a solution to the limitations and the problems of the configurations described above, and to obtain further advantages as will be shown in the following description.

### SUMMARY OF THE INVENTION

The invention is set forth and characterised in the respective main claims, while the dependent claims describe other characteristics of the idea of the main embodiment.

The purpose of the invention is to provide a perfected melting method by using one or more combined modules, each comprising at least a unit suitable to function as a supersonic lance + oxygen/natural gas burner and at least a unit suitable to function as a carbon lance + oxygen/natural gas burner.

According to the invention, the modules are applied on the outer wall of the furnace, and the respective injection elements are made to cooperate through holes made in the wall without protruding inside the volume of the furnace.

In this way, they are protected from splashes of liquid metal, from falling pieces of scrap and from the extremely high thermal stress caused by the temperature of the inner environment of the furnace.

The device according to the invention comprises, in a substantially integrated module, a first unit to inject oxygen and gassy combustible material, and a second unit to inject solid combustible particles or granules containing carbon, and gassy combustible material and oxygen.

According to a variant, the device consists of two independent bodies assembled in a position of reciprocal proximity so that their functions are mutually correlated, and in particular the emissions of their streams closely cooperate with each other.

According to one embodiment of the invention, the first unit is located above and the second unit is located below.

According to a variant the two units are placed adjacent to each other.

According to the invention, the units are reciprocally oriented in such a manner that the respective streams delivered intersect and cooperate at a point, or around a point, which lies above or in cooperation with the upper level of the layer of slag above the bath of molten metal.

According to the invention, during the normal melting cycle the two streams of fluid and/or additional products, that is, the gassy comburent and the solid fuel in granules or particles, are introduced into the furnace by the two units in respective stoichiometrically balanced quantities.

In this way, the chemical reaction deriving therefrom is extremely exothermic, and exhausts the streams of fluids and/or additional products substantially completely; as a result, it supplies a high quantity of energy which acts as an additional contribution for the melting process.

In other words, the streams delivered by the two units give rise, above or in cooperation with the surface of the layer of slag, to a substantially stoichiometric reaction O₂ + C → CO₂ which involves the majority of the material introduced in an optimum manner, with a minimal intermediate production of FeO deriving from the reaction of excess oxygen with ferrous ions liberated from the bath of metal or from the slag itself.

In this way, the energy is liberated for the most part inside the layer of slag, where the stoichiometric reaction in the materials introduced is exhausted.

Thanks to this transmission of energy, the slag becomes super-heated, then transmits the thermal energy to the underlying bath of metal and thus supplies a contribution of energy to the melting process.

When the cycle is started, and the scrap occupies the inner volume of the furnace in an irregular manner, at least one of the two units, and advantageously both, functions as a burner with a first function of making the scrap descend and partly softening it.

As the cycle proceeds, the units are progressively converted to their specific function, for example the first as a supersonic oxygen lance and the second as a lance to introduce solid carbon fuel, in order to fulfil the function mentioned above as an auxiliary energy supply for the melting process, thanks to the incentivation of the chemical reaction of oxidation of the carbon.

There are many advantages to be gained from using these combined modules.

In the first place, by using one or more units to make the scrap fall at the beginning of the cycle it is possible to reach working conditions in a very limited time, about 2ö5 minutes, without needing to operate through other apertures made on the periphery of the melting volume, such as for example the slagging door.

Secondly, the substantially direct reaction, without an intermediate passage into FeO and with the heat developing mostly inside the layer of slag, allows to obtain a greater contribution of energy during the melting step and a better transfer of heat to the bath of metal, with a consequent greater productivity and higher energy saving.

Moreover, there is a greater productivity in the melting itself, in the sense of the ratio between the weight of the liquid metal obtained and that of the ferrous material loaded.

Other technological advantages derive from the greater productivity of the oxygen injected, the increased speed of heat exchange with a consequent reduction in the length of the process, the creation of more foamed slag with consequent advantages in the efficiency of the electric energy, the greater transfer of energy from the liquid stage to the solid stage, thanks to the mechanism of energy transfer by means of transporting particles.

From the operational point of view there is a reduction in installation times and maintenance operations, a reduced likelihood of accidental stoppages, and a reduction in the times of the tap-to-tap cycle.

In an embodiment given here as an example, the operational procedure of the melting cycle using one or more devices according to the invention distributed on the walls of the furnace includes the following steps:
1) heating the solid part, for example scrap, pellets or similar, contained inside the furnace.
   By activating only the burner module of at least one of the two injector units, for example of the oxy-methane type with combustion ratios in the order of 1:2ö1:2.5, the solid material facing the combined modules according to the invention is taken within minutes to the temperature at which melting begins.
2) oxidising step.
   By progressively increasing the oxygen blown in and/or reducing the combustible gas added, space is created to inject solid material containing carbon by the second unit; at the same time a sufficient quantity of highly oxidised liquid metal is obtained which facilitates the start of the reactions which cause the foamed slag to form.
3) melting step.
   The oxygen blown in is taken to a nominal value and simultaneously the injection of carbon powder is begun, in a stoichiometric quantity with respect to the oxygen, in such a manner that the two streams intersect at a point above or inside the upper level of the slag.
   Thanks to this possibility of obtaining the mixture of the oxygen and solid combustible material at a point above the layer of slag, it is possible to optimise the energy contribution which is formed in the slag and which is then transferred therefrom to the melting bath.
   As the carbon powder is transported with the stream of oxygen injected by the second unit, it is also possible to achieve an effect of mechanical transport within the body of the stream of oxygen delivered by the first unit, obtaining a substantially complete transformation, inside the slag, of the carbon into carbon dioxide.
   This complete transformation into carbon dioxide, substantially without the formation of excess free oxygen, allows the whole energy potential possessed by the two streams to be intensively exploited; this energy potential is fully transferred to the slag, the temperature of which is thus increased, with a consequent transfer of the thermal energy to the bath of molten steel.
   The process of heat transfer is encouraged above all by the formation of large volumes of foamed slag which screen the spread of thermal energy towards the free volume above the furnace, which is accompanied by a further transfer of energy to the underlying liquid part and solid part.
4) refining step.

During this step the intensity of the supersonic stream of oxygen is exploited, if necessary, to stir and homogenise the bath and to obtain the desired content of carbon in the liquid bath.

According to the invention, the position of the combined modules, the supersonic lance/burner-carbon lance/burner, on the walls of the melting container, and also the reciprocal orientation of the relative streams, is suitably studied so as to ensure the appropriate angle of incidence.

According to the invention, the first unit suitable to deliver oxygen and natural gas emits a stream at supersonic speed with an angle of incidence with respect to the horizontal plane of between 35° and 45°, advantageously between 38° and 43°, and is located at a height such that the free length from the outlet mouth to the nominal point of impact with the surface of the bath, depending on the diameter of the tundish, is between 1500 and 2300 mm.

The distance between the nominal point of impact of the stream with the bath of liquid metal and the side wall of the tundish of the furnace, according to the invention, is at least 800 mm.

The second unit suitable to deliver oxygen and solid combustible material emits a stream with an angle of incidence with respect to the horizontal plane of between 20° and 40°.

The stream emitted by the second unit joins with the stream emitted by the first unit at a point which has a distance from the nominal upper level of the liquid bath, taken in the direction of the stream emitted by the first unit, of between 350 and 600 mm and a height with respect to the nominal level of between 250 and 350 mm.

The second unit is applied on the wall of the furnace at a height of at least 850 mm with respect to the nominal level of the bath of liquid metal.

### BRIEF DESCRIPTION OF THE DRAWINGS

The attached Figures are given as a non-restrictive example and show some preferential embodiments of the invention as follows:
- Fig. 1: shows partly in section and from above a melting furnace equipped with the combined device according to the invention;
- Fig. 2: shows a section from X to X of the embodiment in Fig. 1, with the units arranged one above the other;
- Fig. 3: is a view partly from above, and from outside the furnace, of the combined device according to the invention wherein the units are arranged adjacent to each other;
- Fig. 4: is a view partly from below, and from outside the furnace, of the device shown in Fig. 3;
- Figs. 5 and 6: show respectively, sections A to A and B to B of Fig. 3;
- Figs. 7a, 7b, 7c and 7d: show respectively from behind, from the side, from above and from the front, a combined module according to the invention in a first embodiment with superimposed units;
- Figs. 8a, 8b, 8c and 8d: show respectively from behind, from the side, from above and from the front, a combined module according to the invention in a second embodiment with adjacent units;
- Figs. 9a and 9b: show the respective time diagrams referring to the respective units of the processing steps according to the invention;
- Fig. 10: shows an application of the invention.

### DETAILED DESCRIPTION OF THE PREFERRED EMBODIMENT

In the attached Figures the reference number 10 identifies a device, or combined module, to inject oxygen and technological gases and carbon in powder form or particles inside a furnace 11 or other similar melting container.

One or more of the combined devices 10 is arranged on the walls 12 of the furnace 11, providing an aperture on the cooling panels 13, into which a cooled box made of copper 14 is applied for assembly purposes.

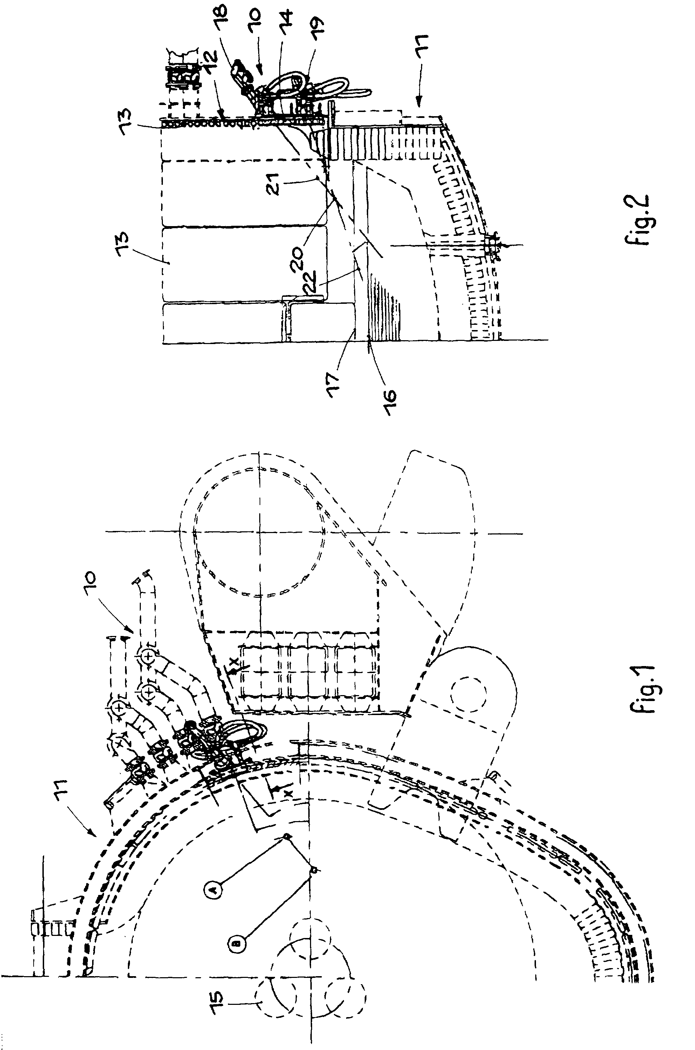

In Fig. 1 number 15 identifies the electrodes of the electric furnace 11, whereas in Fig. 2 number 16 identifies the level of the liquid metal and number 17 identifies the minimum upper level of the layer of slag above.

The levels 16 and 17 represent a substantial working condition, or nominal value, after the at least partial melting of the mass of metal inside the melting container 11.

The device 10 comprises a first unit 18 which can either function as a burner or as a supersonic oxygen lance, and a second unit 19 which can either function as a burner or as an oxygen lance or as a lance to inject carbon on a gassy carrier.

The units 18 and 19 are assembled on the assembly boxes 14 in close proximity so as to constitute substantially a single machine and in such a way that the respective streams of material, shown by the numbers 21 and 22, meet inside the furnace at a point or area 20 located at a desired position above the layer of slag 17.

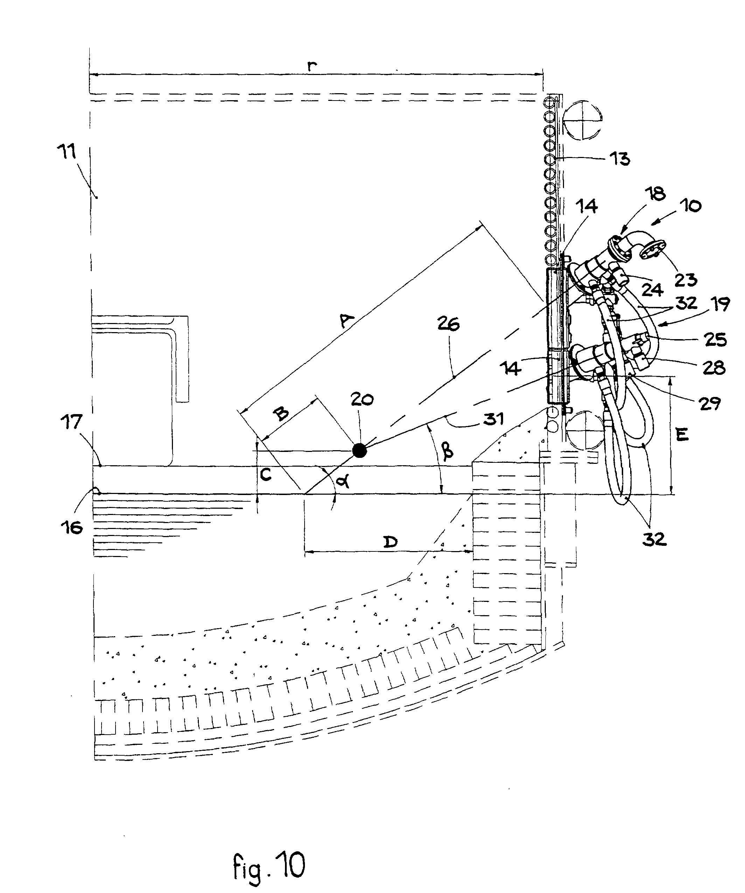

To be more exact, as can be seen in Fig. 10, the point 20 where the two streams 21 and 22 meet is located above the slag at a height "C" of between 250 and 350 mm with respect to the nominal level 16 of the liquid bath, and at a distance "B" from the bath 16, taken along the direction of the stream 21 of the first unit 18, of between 350 and 600 mm.

The units 18 and 19 are assembled on the walls of the furnace 11 in such a manner that their outlet mouths do not protrude inside the volume of the furnace 11 itself, so that they are preserved from splashes of molten metal, from possible knocks caused by the fall or movement of scrap and the thermal stresses caused by the high temperature inside the furnace.

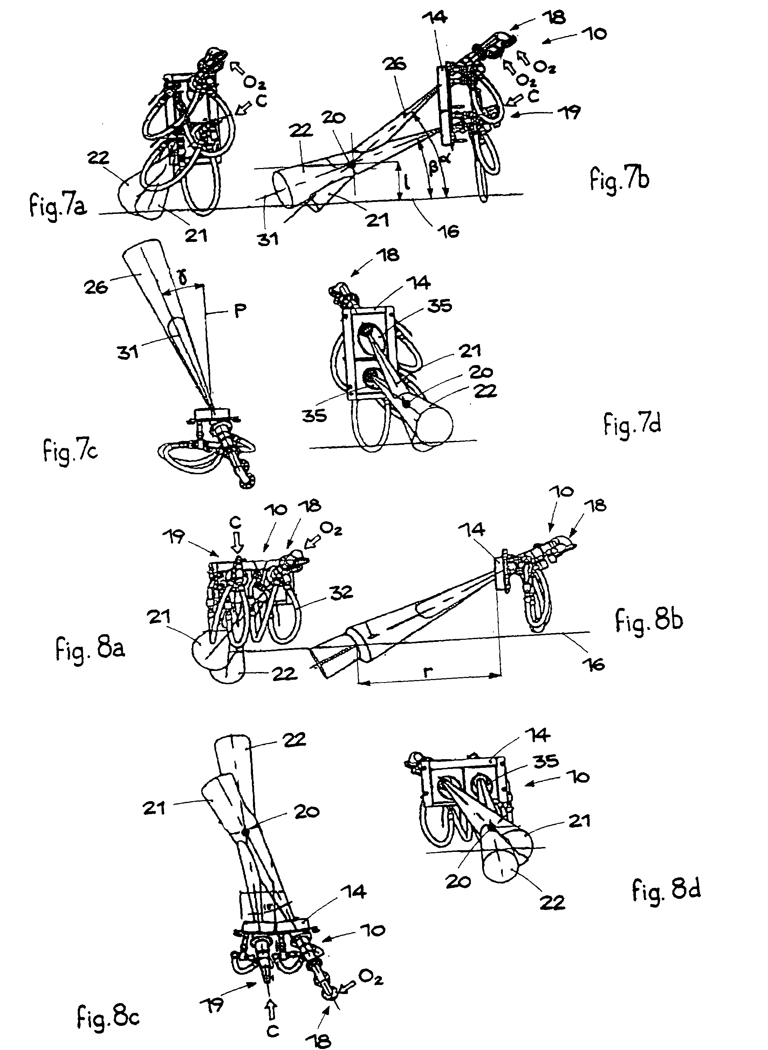

In a first embodiment, as shown in Figs. 7a-7d and 10, the units 18 and 19 are arranged one on top of the other.

In the case shown here, the first unit 18 is located above the second unit 19; according to a possible variant, the second unit 19 is located above the first unit 18.

In the embodiment shown in Figs. 8a-8d, the units 18 and 19 are located adjacent to each other and substantially on the same plane.

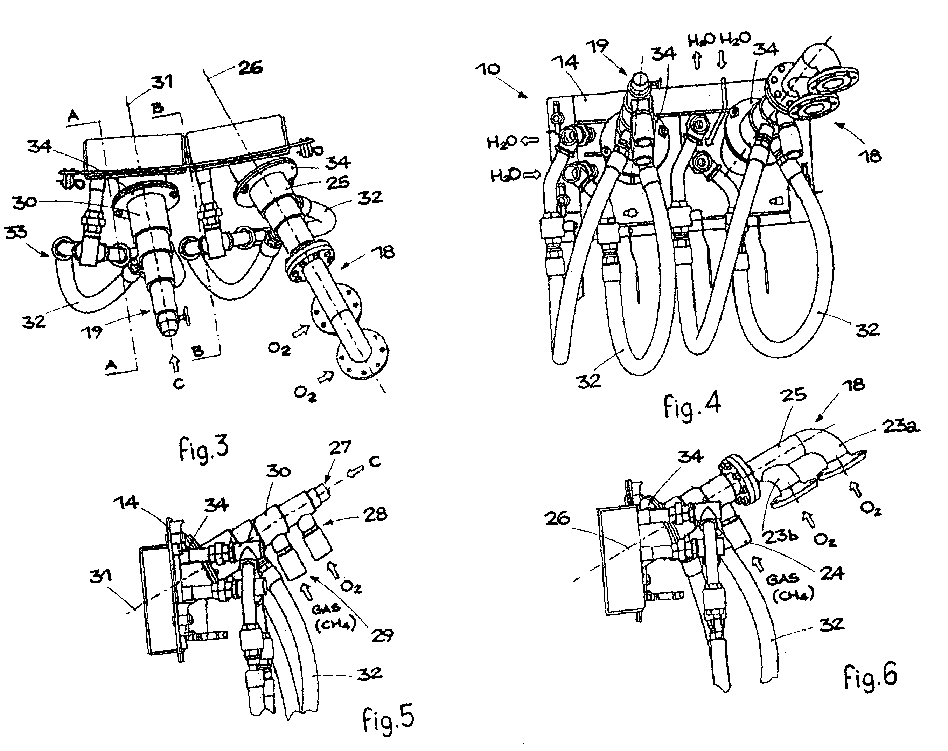

The first unit 18 comprises at least one inlet 23, (two inlets, 23a and 23b, in the variant shown in Fig. 6) to feed the oxygen and one inlet 24 to feed the combustible gas, for example methane (CH₄), or other gas with similar characteristics.

According to a variant, there are three or more inlets, the number depending on the delivery of oxygen required.

The inlets 23 and 24 lead to a feeder pipe 25 with a longitudinal axis 26 sloping at an angle α with respect to the plane defined by the liquid bath 16 (Fig. 7b).

According to the invention, the angle α is between 35° and 45°, advantageously between 38° and 43°.

The feeder pipe 25 consists of two concentric and separate chambers, an inner chamber for the comburent and an outer chamber for the combustible gas.

The second unit 19 (Fig. 5) comprises an axial inlet 27 to feed the carbon and two peripheral inlets, respectively 28 and 29, to feed the oxygen and the combustible gas.

These gases constitute the gassy carrier by means of which, by making the second unit 19 function as a burner in the start-up step of the melting cycle, a tunnel is created in the load of metal so as to allow the solid combustible material containing carbon to be sent inside the melting volume 11.

The axis 31 of the feeder pipe 30 has an angle of incidence β with respect to the bath of liquid metal 16, which according to the invention is between 20° and 40°.

The azimuth inclination of the two axes 26 and 31, that is, angle γ (Fig. 7c) formed by the two axes 26 and 31 with the radial plane P passing through the wall of the furnace in correspondence with the introduction aperture of the units 18 and 19, is between 0° and 35°.

The azimuth inclination of the axis 26 with respect to the axis 31 is between 0° and 25°.

Both the first unit 18 and the second unit 19 include independent cooling circuits, consisting of pipes 32, associated with respective water inlets and outlets, indicated generally here by the reference number 33.

The cooling circuits also serve to cool the copper box 14, and are not described in any more detail here, as they are of a known type.

In this case, both units 18 and 19 are assembled on the copper box 14 by means of a flanged collar 34 equipped with coupling screws.

The box 14 is equipped with a conical assembly hole 35 which allows the flame to be guided (Figs. 7d and 8d) in order to direct the streams of gas or additional material into the various zones of the inner volume of the furnace 11 according to the need to obtain a greater or lesser thermal contribution in said zones.

This possibility of positioning allows to prevent the formation of cold zones inside the furnace 11, and/or to compensate any possible differences in heating caused by a non-uniform distance from the electrodes.

The cooled assembly box 14 is built in such a way as to orientate the units 18 and 19, and therefore the relative streams 21 and 22, both with respect to the bath of liquid metal 16 and with respect to each other, in a pre-determined manner according to the process, the type of scrap material loaded and the management of the melting furnace.

According to the invention, the height "E" of the second unit 19 with respect to the nominal level of the liquid bath 16 is at least 850 mm.

The radial distance "D" with respect to the wall of the furnace of the nominal point of entry of the stream 21 into the bath of liquid metal 16 is at least 800 mm.

The free length "A" of the stream 21, from the outlet mouth of the first unit 18 to the nominal point of entry into the bath 16, is between 1500 and 2300 mm according to the value of the radius "r" of the furnace 11.

The meeting point 20 of the streams delivered by the units 18 and 19 substantially defines the zone wherein, during the normal melting cycle inside the furnace 11, the chemical reaction takes place combining the oxygen delivered by the first unit 18 and the solid combustible material containing carbon delivered by the second unit 19.

Seeing as the gassy and solid substances are delivered in stoichiometrically balanced quantities, the chemical reaction exhausts the streams of material delivered to the highest possible quantity, thus giving rise to a balanced exothermic reaction (O₂ + C → CO₂) which liberates a considerable quantity of thermal energy. This thermal energy causes over-heating of the layer of slag 17 with a subsequent transfer of the heat to the underlying bath of metal 16.

Since the layer of slag 17 also has a screening effect which prevents the heat propagated in the metal bath 16 from spreading into the environment above the furnace 11, the whole thermal contribution determined by the reaction between the two streams of oxygen 21 and combustible material 22 is transferred with great efficiency to the bath 16.

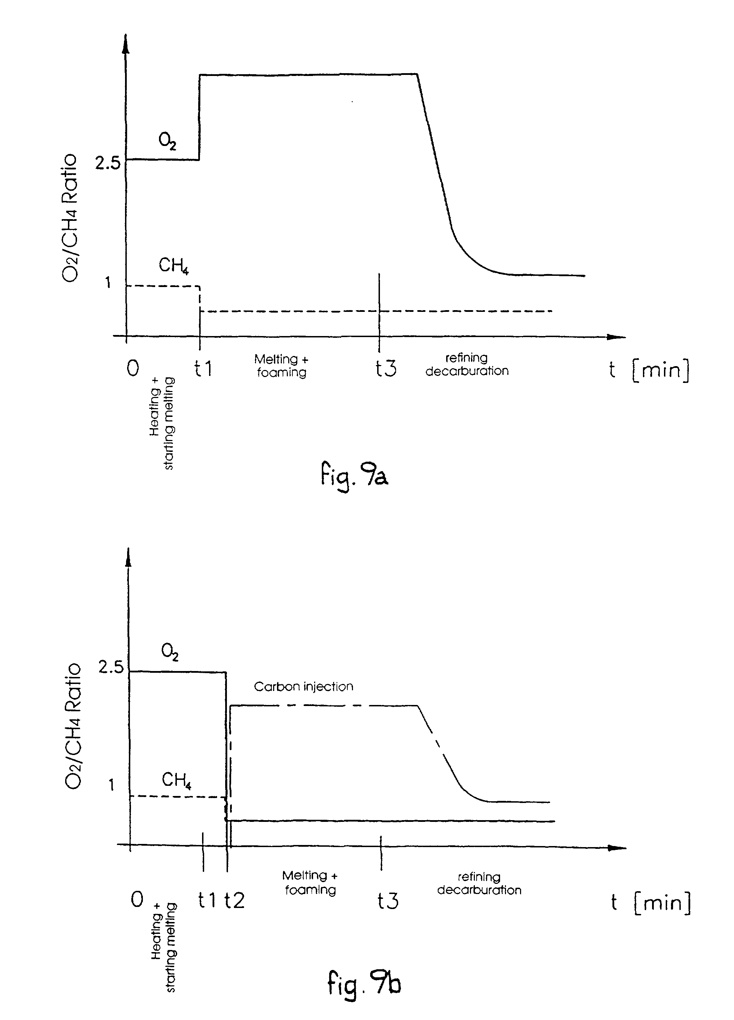

Figs. 9a and 9b show possible time diagrams, referring respectively to the first unit 18 and the second unit 19, of the melting process achieved according to the invention using one or more of the devices 10 described above.

The continuous line, for each unit 18 and 19, shows the temporal development of the respective emission of oxygen; the line of dashes shows the temporal development of the emission of combustible gas (CH₄), whereas the line of dots and dashes shows the temporal development of the emission of carbon through unit 19.

In the heating-melting step, the first unit 18 functions as a burner from time 0 to time t1, with a ratio of oxygen to methane gas, or other combustible gas, included between the stoichiometric ratio and a slightly oxidising ratio, with at most 10% more oxygen compared with the stoichiometric ratio, which for methane varies between 2 and 2.2 (Fig. 9a).

In the heating-melting step, the second unit 19 functions as a burner like unit 18 from time 0 to time t2>t1 (Fig. 9b).

This preparatory heating-melting step serves to take the solid material located inside the furnace 11 and near the device 10 to the temperature at which melting starts.

The time between t1 and t2, wherein the second unit 19 continues operating in burner mode as well as the first unit 18, is a technical delay time, which serves to prevent any accumulation of carbon near the device 10.

In the subsequent oxidation step, from time t1 to time t3 for the first unit 18, the percentage of oxygen injected is increased and/or the percentage of combustible gas is decreased according to an established profile, and the oxygen injected at high delivery and supersonic speed creates a tunnel through the scrap which is propaedeutic for the injection of the carbon.

At the same time liquid metal is generated which sets off the chemical reactions which cause the formation of a highly foamed slag, which encourages the transmission of the electric energy supplied by the electrodes, increasing the productivity of the electric arc by reducing the losses due to irradiance and by increasing the transmission of heat due to conduction between the hot slag and the cold metal.

From time t2 to time t3 the second unit 19 is activated to inject the stream 22 of solid combustible material containing carbon in a quantity stoichiometrically balanced with the quantity of oxygen delivered by the first unit 18, and the delivery of the combustible gas is reduced according to an appropriate profile.

The stream 22 of solid combustible material intersects with the stream 21 of oxygen around the point 20 above the layer of slag 17, setting off the balanced reaction with the oxygen delivered by the first unit 18 in the manner described above.

During this step, thanks to the arrangement of the two units 18 and 19 with the intersection of the streams above the slag 17, the carbon is completely oxidised into carbon dioxide (O₂ + C → CO₂), with an intensive and complete exploitation of the energy potential deriving from the exothermic reaction, which potential can thus be entirely transferred to the slag 17 and from the slag to the bath of liquid steel 16.

During this step, enormous quantities of highly agitated foamed slag are formed, with a consequent increase in the transfer of energy to the scrap above and to the forming bath of metal.

The possible refining step, which starts from time t3, may include the gradual reduction of the stream of oxygen which no longer has the function of stimulating and intensifying chemical reactions, but substantially has the task of stirring and homogenising the bath and of obtaining the desired carbon content.

It is obvious that the duration of the individual steps, and also the choice of the correct values of delivery and pressure of the streams, the correct orientation of the units 18 and 19, both with respect to the bath and with respect to each other, and every other processing choice either operational or technological, are the responsibility of those working in the field, according to the specific requirements of the process and the results required, on each particular occasion.

## Claims

1. Device to deliver comburent and combustible gases, such as oxygen, methane or similar, and/or solid combustible materials in powder form or particles containing carbon inside a melting container (11) for metals, the melting container (11) cooperating with electrodes (15) suitable to transmit energy to melt metals to obtain a bath of liquid metal (16) with an upper covering layer of slag (17), the device being characterised in that it comprises, in a substantially integrated module, a first unit (18) with an axis of delivery (26), functioning as a burner and/or supersonic lance to deliver oxygen, and a second unit (19) with an axis of delivery (31), functioning as a burner and/or carbon lance, the units (18, 19) being assembled on the wall of the melting container (11) by means of an assembly element (14) in such a manner that their outlet mouths do not protrude into the inner volume of the furnace (11), the units (18, 19) being reciprocally oriented so that the respective streams delivered (21, 22) meet around a point (20) located above or around the upper level of the layer of slag (17), giving rise, during the normal melting cycle, to a substantially stoichiometrically reaction balanced between oxygen and carbon.

2. Device as in Claim 1, characterised in that the first unit (18) and the second unit (19) are suitable to deliver respectively, during the normal melting cycle, oxygen and solid combustible materials in particles or granules containing carbon in substantially stoichiometric quantities, giving rise, above the layer of slag (17), to an exothermic reaction O₂ + C → CO₂ which involves, substantially completely, the substances introduced with a minimal intermediate production of FeO.

3. Device as in Claim 1 or 2, characterised in that the height ("C") of the point of intersection (20) between the two streams (21, 22) with respect to the bath of liquid metal (16) is between 250 and 350 mm.

4. Device as in Claim 1 or 2, characterised in that the angle (α) formed by the axis (26) of delivery of the first unit (18) with respect to the horizontal is between 25° and 55°, preferentially between 38° and 43°.

5. Device as in Claim 1 or 2, characterised in that the angle (β) formed by the axis (31) of delivery of the second unit (19) with respect to the horizontal is between 20° and 40°.

6. Device as in Claim 1 or 2, characterised in that the angle (γ) formed by the two axes (26, 31) with the radial plane (P) passing through the wall of the melting container (11) in correspondence with the introduction aperture of the units (18, 19) is between 0° and 35°.

7. Device as in any claim hereinbefore, characterised in that the height ("E") with respect to the bath of metal (16) of the unit (18, 19) located lower of the two is at least 850 mm.

8. Device as in Claim 1, characterised in that the free length ("A") of the stream (21) delivered by the first unit (18), from its outlet mouth to the nominal point of entry into the bath (16), is between 1500 and 2300 mm.

9. Device as in Claim 1, characterised in that the first unit (18) is located above the second unit (19).

10. Device as in Claim 1, characterised in that the first unit (18) is located adjacent to the second unit (19).

11. Device as in Claim 1, characterised in that the assembly element (14) comprises a respective conical hole (35) for the insertion of the two units (18, 19), the conical hole being pre-defined according to the process, directing the streams (21, 22) of material inside the volume of the furnace (11).

12. Device as in any claim hereinbefore, characterised in that the units (18, 19) are associated with respective independent cooling circuits.

13. Method to melt metals in a melting container (11), wherein one or more devices (10) as in any claim hereinbefore are assembled on the wall (12) of the melting container (11), the method being characterised in that it comprises:
- a first heating step of the solid part, for example scrap, pellets or similar, contained inside the melting container (11), wherein at least one of the two units (18, 19) is activated in burner mode with the delivery of oxygen and combustible gases with a stoichiometric or slightly oxidising ratio, to take the solid material to a temperature where melting starts in a time of between 2 and 5 minutes;
- a second oxidisation step wherein the percentage of oxygen fed to the first unit (18) is increased and/or the percentage of combustible gas is reduced so as to create a high oxidisation in the partly melted metal inside the melting container (11);
- a third melting step wherein the first unit (18) continues to deliver prevalently oxygen and the second unit (19) is activated in carbon lance mode to deliver solid combustible material in a quantity substantially stoichiometrically balanced with respect to the oxygen delivered by the first unit (18), in order to set off the chemical reactions to oxidise the carbon into carbon dioxide (O₂ + C → CO₂) in a zone (20) above the layer of slag (17) with minimal formation of excess free oxygen, with consequent transfer of the liberated thermal energy to the layer of slag (17) and from the slag to the underlying bath of metal (16).

14. Method as in Claim 13, characterised in that the melting step is followed by a refining step wherein the quantity of oxygen delivered by the first unit (18) is progressively reduced according to the purpose of stirring and homogenising the bath of metal (16) and obtaining therein the desired content of carbon, and wherein the quantity of solid combustible material delivered by the second unit (19) is also progressively reduced.

15. Method as in Claim 13, characterised in that in the first heating step both units (18, 19) are activated in burner mode, and the second unit (19) is maintained in said mode for a longer time than the first unit (18) in order to prevent accumulations of carbon in proximity of the device (10).

## Patentansprüche

1. Vorrichtung zum Liefern von Kraftstoff bzw. Sauerstoffträgern und brennbaren Gasen, wie Sauerstoff, Methan oder dgl., und/oder festen, kohlenstoffhältigen brennbaren Materialien in Pulver- oder Teilchenform in einen Schmelzbehälter (11) für Metalle, welcher Schmelzbehälter (11) mit Elektroden (15) zusammenarbeitet, die Energie zum Schmelzen von Metallen übertragen, um ein Schmelzbad (16) mit einer oberen Deckschicht von Schlacke (17) zu erhalten, **dadurch gekennzeichnet**, daß in einem Modul im Wesentlichen integriert angeordnet sind eine erste, mit einer Lieferachse (26) versehene Einheit (18), die als Brenner und/oder Ultraschall-Lanze zur Lieferung von Sauerstoff arbeitet, und eine zweite, mit einer Lieferachse (31) versehene Einheit (19), die als Brenner und/oder Kohlenstofflanze arbeitet, wobei die Einheiten (18, 19) an der Wand des Schmelzbehälters mittels eines Montageelementes (14) derart angebracht sind, daß ihre Auslaßmünder nicht in den Innenraum des Ofens hineinragen, und weiters die Einheiten (18, 19) gegenseitig so orientiert sind, daß die entsprechenden gelieferten Ströme (21, 22) einander an einem Punkt (20) treffen, der oberhalb oder etwa um den oberen Spiegel der Schlackenschicht (17) treffen, wodurch während des normalen Schmelzzyklus eine im Wesentlichen stöchiometrisch ausgewogene Reaktion zwischen Sauerstoff und Kohlenstoff entsteht.

2. Vorrichtung nach Anspruch 1, **dadurch gekennzeichnet,** daß die erste Einheit (18) und die zweite Einheit (19) dazu ausgebildet sind, um während des normalen Schmelzzyklus sauerstoff- und kohlenstoffhaltiges brennbares Material in Teilchen oder Granulaten in im Wesentlichen stöchiometrischen Mengen zu liefern, wodurch es oberhalb der Schlackenschicht (17) zu einer exothermischen Reaktion O₂+C→CO₂ kommt, woran die eingeführten Stoffe im Wesentlichen komplett mit einer minimalen Zwischenproduktion von FeO beteiligt sind.

3. Vorrichtung nach Anspruch 1 oder 2, **dadurch gekennzeichnet,** daß die Höhe (C) des Schnittpunktes (20) zwischen den beiden Strömen (21, 22) in bezug auf das Schmelzbad (16) zwischen 250 mm und 350 mm liegt.

4. Vorrichtung nach Anspruch 1 oder 2, **dadurch gekennzeichnet,** daß der zwischen der Lieferachse (26) der ersten Einheit und der Horizontalen liegende Winkel (α) zwischen 25° und 55°, vorzugsweise zwischen 38° und 43°, liegt.

5. Vorrichtung nach Anspruch 1 oder 2, **dadurch gekennzeichnet,** daß der zwischen der Lieferachse (31) der zweiten Einheit (19) und der Horizontalen befindliche Winkel (β) zwischen 20° und 40° liegt.

6. Vorrichtung nach Anspruch 1 oder 2, **dadurch gekennzeichnet,** daß der durch die beiden Achsen (26, 31) gegenüber der durch die Wand des Schmelzbehälters(11) im Bereich ihrer Eintrittsöffnung der Einheiten (18, 19) gehenden Radialebene (P) gebildete Winkel (γ) zwischen 0° und 35° liegt.

7. Vorrichtung nach einem der vorstehenden Ansprüche, **dadurch gekennzeichnet,** daß die Höhe (E) jener der beiden Einheiten (18, 19), die tiefer angeordnet ist, mindestens 850 mm beträgt.

8. Vorrichtung nach Anspruch 1, **dadurch gekennzeichnet,** daß die freie Länge (A) des Stromes (21) vom Auslaßmund der ersten Einheit (18) zum Eintrittspunkt in das Bad (16) zwischen 1500 mm und 2300 mm liegt.

9. Vorrichtung nach Anspruch 1, **dadurch gekennzeichnet,** daß die erste Einheit (18) oberhalb der zweiten Einheit (19) angeordnet ist.

10. Vorrichtung nach Anspruch 1, **dadurch gekennzeichnet,** daß die erste Einheit (18) anschließend an die zweite Einheit (19) angeordnet ist.

11. Vorrichtung nach Anspruch 1, **dadurch gekennzeichnet,** daß das Montageelement (14) eine entsprechende konische Öffnung (35) für das Einsetzen der beiden Einheiten (18, 19) aufweist, die entsprechend dem Verfahren zum Richten der Materialströme (21, 22) in den Ofenraum (11) vorbestimmt ist.

12. Vorrichtung nach einem der vorstehenden Ansprüche, **dadurch gekennzeichnet,** daß die Einheiten (18, 19) mit entsprechenden Kühlkreisläufen ausgestattet sind.

13. Verfahren zum Schmelzen von Metallen in einem Schmelzbehälter (11), an dessen Wand (12) eine oder mehrere Vorrichtungen (10) nach einem der vorstehenden Ansprüche angeordnet sind, **gekennzeichnet durch**:
- eine erste Aufheizstufe für den im Schmelzbehälter (11) befindlichen festen Teil, z.B. Schrott, Pellets oder dgl. bei der mindestens eine der beiden Einheiten (18, 19) als Brenner arbeitet, wobei sie Sauerstoff und brennbare Gase in einem stöchiometrischen oder leicht oxydierenden Verhältnis liefern, um das feste Material zwischen 2 und 5 Minuten auf eine Temperatur zu bringen, bei der das Schmelzen beginnt;
- eine zweite Oxydierungsstufe, bei der der Anteil des durch die erste Einheit (18) gelieferten Sauerstoffes gesteigert und/oder der Anteil von brennbaren Gasen vermindert wird, sodaß eine hohe Oxydation im teilweise geschmolzenen Metall innerhalb des Schmelzbehälters (11) erreicht wird;
- eine dritte Schmelzstufe, bei der die erste Einheit (18) weiterhin überwiegend Sauerstoff liefert und die zweite Einheit (19) als Kohlenstofflanze aktiviert wird, um festes brennbares Material in einer Menge zu liefern, die im Wesentlichen stöchiometrisch in bezug auf den durch die erste Einheit (18) gelieferten Sauerstoff ausgewogen ist, womit die chemischen Reaktionen zum Oxydieren des Kohlenstoffes in Kohlenstoffdioxyd (O₂+C→CO₂) in einem Bereich (20) oberhalb der Schlackenschicht (17) mit einer minimalen Bildung überschüssigen Sauerstoff eingeleitet wird, wodurch ein Übergang von freier thermischer Energie auf die Schlackenschicht (17) und von der Schlacke auf das darunterliegende Schmelzbad (16) erreicht wird.

14. Verfahren nach Anspruch 13, **dadurch gekennzeichnet,** daß auf die Schmelzstufe eine Refining-Stufe folgt, bei der die von der ersten Einheit (18) gelieferte Sauerstoffmenge zum Zwecke des Bewegens und der Homogenisierung des Schmelzbades (16) sowie der Erreichung eines gewünschten Kohlenstoffgehaltes fortschreitend vermindert wird, wobei die Menge des festen brennbaren Materials, das durch die zweite Einheit (19) geliefert wird, ebenso fortschreitend vermindert wird.

15. Verfahren nach Anspruch 13, **dadurch gekennzeichnet,** daß in der ersten Aufheizstufe beide Einheiten (18, 19) als Brenner aktiviert werden und die zweite Einheit (19) in einem längeren Zeitraum als die erste Einheit (18) in diesem Zustand gehalten wird, um Anhäufungen von Kohlenstoff in Nähe der Vorrichtung (10) zu verhindern.

## Revendications

1. Dispositif pour délivrer des gaz comburants et des gaz combustibles, par exemple de l'oxygène, du méthane ou similaire et/ou des matériaux combustibles solides en forme de poudre ou de particules contenant du carbone à l'intérieur d'un conteneur de fusion (11) pour métaux, le conteneur de fusion (11) coopérant avec des électrodes (15) convenant pour transmettre de l'énergie en vue de faire fondre des métaux pour obtenir un bain de métal liquide (16) avec une couche supérieure de recouvrement de laitier (17), le dispositif étant caractérisé en ce qu'il comprend dans un module essentiellement intégré une première unité (18) présentant un axe de fourniture (26), fonctionnant comme brûleur et/ou comme lance supersonique pour délivrer de l'oxygène, et une deuxième unité (19) présentant un axe de fourniture (31), fonctionnant comme brûleur et/ou comme lance à charbon, les unités (18, 19) étant montées sur la paroi du conteneur de fusion (11) au moyen d'un élément de montage (14) de telle sorte que leurs embouchures de sortie ne débordent pas à l'intérieur du volume intérieur du four (11), les unités (18, 19) étant orientées mutuellement de manière à ce que les flux respectifs (21, 22) qu'elles délivrent se rencontrent autour d'un point (20) situé au-dessus ou à proximité du niveau supérieur de la couche de laitier (17) ce qui donne lieu, pendant le cycle normal de fusion, à une réaction essentiellement équilibrée stoechiométriquement entre l'oxygène et le carbone.

2. Dispositif selon la revendication 1,
caractérisé en ce que la première unité (18) et la deuxième unité (19) conviennent pour délivrer respectivement, pendant le cycle normal de fusion, de l'oxygène et des matériaux combustibles solides en particules ou granulés, contenant du carbone en quantités essentiellement stoechiométriques, ce qui donne lieu au-dessus de la couche de laitier (17) à une réaction exothermique O₂ + C -> CO₂ qui implique essentiellement complètement les substances introduites, avec une production intermédiaire minimale de FeO.

3. Dispositif selon la revendication 1 ou 2, caractérisé en ce que la hauteur ("C") du point d'intersection (20) entre les deux flux (21, 22) par rapport au bain de métal liquide (16) est comprise entre 250 et 350 mm.

4. Dispositif selon la revendication 1 ou 2, caractérisé en ce que l'angle (α) formé par l'axe (26) de fourniture de la première unité (18) par rapport à l'horizontale est compris entre 25° et 55°, de préférence entre 38° et 43°.

5. Dispositif selon la revendication 1 ou 2,
caractérisé en ce que l'angle (β) formé par l'axe (31) de fourniture de la deuxième unité (19) par rapport à l'horizontale est compris entre 20° et 40°.

6. Dispositif selon la revendication 1 ou 2, caractérisé en ce que l'angle (γ) formé par les deux axes (26, 31) avec le plan radial (P) passant à travers la paroi du conteneur de fusion (11) en correspondance avec l'ouverture d'introduction des unités (18, 19) est compris entre 0° et 35°.

7. Dispositif selon l'une quelconque des revendications précédentes, caractérisé en ce que la hauteur ("E") par rapport au bain de métal (16) de l'unité (18, 19) située plus bas que l'autre est d'au moins 850 mm.

8. Dispositif selon la revendication 1, caractérisé en ce que la longueur libre ("A") du flux (21) délivré par la première unité (18) depuis son embouchure de sortie jusqu'au point nominal d'entrée dans le bain (16) est comprise entre 1 500 et 2 300 mm.

9. Dispositif selon la revendication 1, caractérisé en ce que la première unité (18) est située au-dessus de la deuxième unité (19).

10. Dispositif selon la revendication 1, caractérisé en ce que la première unité (18) est située en position adjacente à la deuxième unité (19).

11. Dispositif selon la revendication 1, caractérisé en ce que l'élément de montage (14) comprend un trou conique respectif (35) pour l'insertion des deux unités (18, 19), le trou conique étant prédéfini en fonction du procédé, et dirigeant les flux (21, 22) de matière à l'intérieur du volume du four (11).

12. Dispositif selon l'une quelconque des revendications précédentes, caractérisé en ce que les unités (18, 19) sont associées à des circuits de refroidissement respectifs indépendants.

13. Procédé pour fondre des métaux dans un conteneur de fusion (11) dans lequel un ou plusieurs dispositifs (10) selon l'une quelconque des revendications précédentes sont assemblés sur la paroi (12) du conteneur de fusion (11), le procédé étant
caractérisé en ce qu'il comprend :
- une première étape de chauffage de la partie solide, par exemple de la mitraille, des pellets ou similaires, contenues à l'intérieur du conteneur de fusion (11), dans laquelle au moins l'une des deux unités (18, 19) est activée en mode brûleur avec délivrance d'oxygène et de gaz combustibles dans un rapport stoechiométrique ou légèrement oxydant, pour amener le matériau solide à une température où la fusion commence, en une période comprise entre 2 et 5 minutes ;
- une deuxième étape oxydante dans laquelle le pourcentage d'oxygène introduit dans la première unité (18) est augmenté et/ou le pourcentage de gaz combustible est réduit de manière à créer une forte oxydation dans le métal partiellement fondu à l'intérieur du conteneur de fusion (11) ;
- une troisième étape de fusion dans laquelle la première unité (18) continue de délivrer principalement de l'oxygène et la deuxième unité (19) est activée en mode lance à charbon pour délivrer du matériau combustible solide en une quantité qui est essentiellement équilibrée stoechiométriquement par rapport à l'oxygène délivré par la première unité (18), pour déclencher les réactions chimiques d'oxydation du carbone en dioxyde de carbone (O₂ + C → CO₂) dans une zone (20) située au-dessus de la couche de laitier (17), avec une formation minimale d'oxygène libre en excès et avec transfert consécutif de l'énergie thermique libérée vers la couche de laitier (17) et du laitier vers le bain de métal (16) sous-jacent.

14. Procédé selon la revendication 13, caractérisé en ce que l'étape de fusion est suivie d'une étape d'affinage dans laquelle la quantité d'oxygène délivrée par la première unité (18) est progressivement réduite dans le but de brasser et d'homogénéiser le bain de métal (16) et à y obtenir la teneur voulue en carbone, et dans laquelle la quantité de matériau combustible solide délivrée par la deuxième unité (19) est également progressivement réduite.

15. Procédé selon la revendication 13, caractérisé en ce que dans la première étape de chauffage, les deux unités (18, 19) sont activées en mode brûleur, et la deuxième unité (19) est maintenue dans ledit mode pendant une période plus longue que la première unité (18), pour empêcher des accumulations de carbone à proximité du dispositif (10).
